# EUROPÄISCHE PATENTSCHRIFT

(11) **EP 0 670 349 B1**
(45) Veröffentlichungstag und Bekanntmachung des Hinweises auf die Patenterteilung: **13.05.1998**
(21) Anmeldenummer: 95102636.8
(22) Anmeldetag: 24.02.1995
(51) Int. Cl.: C08L 23/12

(54) **Hochsteifes Polypropylenpolymerisat**
Highly rigid polypropylene polymer
Polypropylène à grande rigidité

(30) Priorität: 04.03.1994 DE 4407327
(43) Veröffentlichungstag der Anmeldung: 06.09.1995
(73) Patentinhaber: BASF AKTIENGESELLSCHAFT, 67056 Ludwigshafen (DE)
(72) Erfinder: Zolk, Ralf, Dr., D-67256 Weisenheim (DE); Werner, Rainer Alexander, Dr., D-67098 Bad Dürkheim (DE); Kersting, Meinolf, Dr., D-67098 Bad Dürkheim (DE)

(56) Entgegenhaltungen:
- EP-A- 0 397 498
- EP-A- 0 586 109
- ANGEWANDTE MACROMOLECULARE CHEMIE, Bd. 214, Januar 1994 BASEL, Seiten 91-99, XP 000425493 V.SVEHLOVA ET AL 'mechanical properties of talc filled polypropylene'

## Beschreibung

Die vorliegende Erfindung betrifft Propylenpolymerisate, enthaltend
a) ein Propylenhomopolymerisat mit einem Schmelzflußindex von 5 bis 25 g/10 min, bei einer Temperatur von 230°C und unter einem Gewicht von 2,16 kg, nach ISO-Norm 1133 und einem Isotaktizitätsindex von wenigstens 98 % und
b) ein Nukleierungsmittel,
wobei pro 100 Gew.-Teile des Propylenhomopolymerisats a) 0,01 bis 1,5 Gew.-Teile des Nukleierungsmittels b) eingesetzt werden.

Weiterhin betrifft die vorliegende Erfindung ein Verfahren zur Herstellung dieser Polymerisate sowie deren Verwendung als Folien, Fasern oder Formkörper.

Die Herstellung von Polymerisaten des Propylens durch Ziegler-Natta-Polymerisation ist bereits mehrfach beschrieben worden. Die dabei verwendeten Katalysatorkomponenten enthalten u.a. Verbindungen des mehrwertigen Titans, Aluminiumhalogenide und/oder Alkyle, sowie Elektronendonorverbindungen, wobei meistens Silane, Ester, Ketone oder Lactone verwendet werden (EP-B 14 523, EP-B 45 977, EP-B 86 473, EP-A 171 200, US-A 48 57 613).

Nach diesem Verfahren können Propylenhomopolymerisate mit sehr unterschiedlichen Eigenschaften erhalten werden, beispielsweise mit einer deutlich unterschiedlichen Steifigkeit, Schlagzähigkeit oder Fließfähigkeit. Einige Anwendungsbereiche, in denen vorzugsweise Polypropylen verwendet wird, benötigen insbesondere solche Polypropylene, die neben einer hohen Steifigkeit aus verarbeitungstechnischen Gründen auch eine verbesserte Fließfähigkeit aufweisen. Polypropylene mit einer hohen Steifigkeit und guten Fließfähigkeitseigenschaften zeichnen sich jedoch häufig durch sehr schlechte Schlagzähigkeitswerte aus.

Aus der DE-B 3 246 479 sind Propylenhomopolymerisate zur Herstellung von hochsteifen Formkörpern bekannt, die aber hinsichtlich ihrer Fließfähigkeit und Steifigkeit noch verbesserungsfähig sind. Der Lehre dieser Patentschrift läßt sich u.a. entnehmen, daß übliche organische Nukleierungsmittel sowie Talkum häufig zu einer Verschlechterung der Schlagzähigkeit bei Polyolefinen führen.

Für zahlreiche Anwendungsbereiche von Polyolefinen sind aber ausreichend gute Schlagzähigkeitswerte eine wichtige Voraussetzung.

Der vorliegenden Erfindung lag daher die Aufgabe zugrunde, den geschilderten Nachteilen abzuhelfen und ein verbessertes Propylenhomopolymerisat zu entwickeln, welches sich durch ein sehr günstiges Eigenschaftsprofil hinsichtlich einer hohen Steifigkeit und Fließfähigkeit bei gleichzeitig guter Schlagzähigkeit auszeichnet und darüber hinaus noch gut verarbeitet werden kann.

Demgemäß wurden neue Propylenpolymerisate entwickelt, enthaltend
a) ein Propylenhomopolymerisat mit einem Schmelzflußindex von 5 bis 25 g/10 min, bei einer Temperatur von 230°C und unter einem Gewicht von 2,16 kg, nach ISO-Norm 1133 und einem Isotaktizitätsindex von wenigstens 98 % und
b) ein Nukleierungsmittel,
wobei pro 100 Gew.-Teile des Propylenhomopolymerisats a) 0,01 bis 1,5 Gew.-Teile des Nukleierungsmittels b) eingesetzt werden.

Bevorzugt wird dabei ein solches Propylenhomopolymerisat a) eingesetzt, welches einen Schmelzflußindex von 8 bis 22 g/10 min, bei einer Temperatur von 230°C und unter einem Gewicht von 2,16 kg, nach ISO-Norm 1133, aufweist. Der Schmelzflußindex entspricht dabei der Menge an Polymerisat in Gramm, die aus der nach ISO-Norm 1133 genormten Prüfvorrichtung bei einer Temperatur von 230°C und unter einem Gewicht von 2,16 kg ausgepreßt wird.

Das erfindungsgemäße Propylenpolymerisat enthält insbesondere ein solches Propylenhomopolymerisat a), dessen Isotaktizitätsindex bei 98,0 % bis 99,0 % liegt. Unter dem Isotaktizitätsindex soll dabei der Anteil an Polymerisat verstanden werden, der nach ISO-Norm 6427 b) in Xylol unlöslich ist. Der Isotaktizitätsindex ist eine Maßzahl für die Stereospezifität des Propylenhomopolymerisats.

Das zu diesen Propylenhomopolymerisaten a) führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 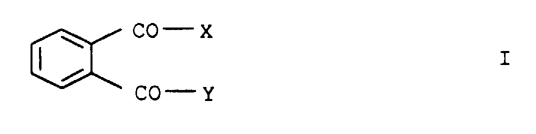 verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder SiO₂·aAl₂O₃ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel II

R¹ ₙSi(OR²)₄₋ₙ II

wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Arylalkylgruppe bedeutet, R² gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, R² eine C₁- bis C₄-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan, Dimethoxysek.butylisopropylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 20:1 beträgt. Die Katalysatorbestandteile können in beliebiger Reihenfolge einzeln oder als Gemisch der Komponenten in das Polymerisationssystem eingebracht werden.

Die Polymerisation zur Herstellung der Propylenhomopolymerisate a) wird üblicherweise bei einem Druck von 20 bis 40 bar, einer Temperatur von 60 bis 90°C und einer mittleren Verweilzeit des Reaktionsgemisches von 0,5 bis 5 Stunden durchgeführt. Bevorzugt sind dabei Drücke von 25 bis 35 bar, Temperaturen von 65 bis 85°C und mittlere Verweilzeiten von 1,0 bis 4 Stunden. Man wählt die Polymerisationsbedingungen üblicherweise so, daß pro mmol der Aluminiumkomponente 0,05 bis 2 kg, bevorzugt 0,1 bis 1,5 kg des Propylenhomopolymerisats a) gebildet werden.

Das Molekulargewicht der dabei erhältlichen Polymerisate kann wie üblich durch Zugabe von Reglern, insbesondere von Wasserstoff kontrolliert werden. Als Regler können auch C₂- bis C₆-Alk-1-ene, beispielsweise Ethylen oder But-1-en eingesetzt werden. In diesem Fall kann das Propylenhomopolymerisat a) noch bis zu 0,1 Gew.-% anderer C₂- bis C₆-Alk-1-ene enthalten.

Neben dem Propylenhomopolymerisat a) enthalten die erfindungsgemäßen Propylenpolymerisate noch ein Nukleierungsmittel b), welches definitionsgemäß die Keimbildung bei der Kristallisation aus der Schmelze beschleunigt. Als Nukleierungsmittel werden dabei die in der Kunststofftechnik üblicherweise eingesetzten Nukleierungsmittel verwendet, beispielsweise mineralische Zusatzstoffe wie Talkum, Kieselsäure oder Kaolin, oder organische Verbindungen wie Mono- und Polycarbonsäuren sowie deren Salze, oder Polymerisate wie Ethylen-Acrylester-Copolymerisate.

Als Nukleierungsmittel können dabei u.a. Dibenzylidensorbitol und dessen C₁-C₈-alkylsubstituierte Derivate, beispielsweise Methyldibenzylidensorbitol verwendet werden, ferner Salze von Diestern der Phosphorsäure.

Als besonders bevorzugtes Nukleierungsmittel wird feinteiliges Talkum im erfindungsgemäßen Propylenpolymerisat eingesetzt. Das feinteilige Talkum sollte vorzugsweise eine mittlere Teilchengröße von weniger als 5 µm, insbesondere von weniger als 3 µm, aufweisen.

Die vorstehend beschriebenen Nukleierungsmittel b) sind übliche im Handel erhältliche Additive. Neben den Nukleierungsmitteln b) können im erfindungsgemäßen Propylenpolymerisat noch übliche Stabilisatoren wie beispielsweise Calciumstearat und phenolische Antioxidantien, Wärmestabilisatoren, UV-Stabilisatoren und Verarbeitungshilfsmittel zugegeben werden.

In den erfindungsgemäßen Propylenpolymerisaten werden das Propylenhomopolymerisat a) und das Nukleierungsmittel b) üblicherweise in solchen Mengenverhältnissen verwendet, daß pro 100 Gew.-Teile des Propylencopolymerisats a) 0,01 bis 1,5 Gew.-Teile, insbesondere 0,1 bis 1,0 Gew.-Teile und besonders bevorzugt 0,2 bis 0,8 Gew.-Teile des Nukleierungsmittels b), eingesetzt werden.

Die Herstellung der erfindungsgemäßen Propylenpolymerisate erfolgt durch Zumischen des jeweils verwendeten Nukleierungsmittels b) zum Propylenhomopolymerisat a) in den in der Kunststoffverarbeitung üblicherweise zum Mischen von Stoffen eingesetzten Apparaturen beispielsweise in Trommelmischern, in Mühlen, in Schnecken- oder Scheibenextrudern, in Walzwerken oder Knetern. Das Propylenhomopolymerisat a) und das Nukleierungsmittel b) werden in der Mischapparatur üblicherweise bei einer Temperatur von 200 bis 250°C, insbesondere von 210 bis 240°C, miteinander vermischt. Der Mischungsvorgang erfolgt dabei in der Regel bei Drücken von 1 bis 100 bar und mittleren Verweilzeiten von 0,5 bis 60 Minuten. Die genauen Werte für den Druck und die mittlere Verweilzeit sind von den jeweils eingesetzten Mischapparaturen abhängig.

Weiterhin kann das Nukleierungsmittel b) auch auf das Propylenhomopolymerisat a) aufgesprüht werden.

Die erfindungsgemäßen Propylenpolymerisate zeichnen sich u.a. durch eine sehr hohe Steifigkeit und Fließfähigkeit bei gleichzeitig noch guter Schlagzähigkeit aus. Sie sind darüber hinaus gut verarbeitbar und weisen nur eine sehr geringe Eigenfarbe, insbesondere einen sehr geringen Yellowness-Index (gemessen nach ASTM D 1925) auf. Aus diesem Grund eignen sich die erfindungsgemäßen Propylenpolymerisate u.a. auch zur Verarbeitung zu transparenten Fertigteilen oder für die Einfärbung mit hellen Farben. Sie können allgemein zur Herstellung von Folien, Fasern und Formkörpern verwendet werden.

### Beispiele

### Beispiel 1

Die Herstellung der Homopolymerisate des Propylens erfolgte in einem Rührautoklaven mit einem Nutzvolumen von 180 1 in Anwesenheit von Wasserstoff als Molekulargewichtsregler. Der Reaktor enthielt ein bewegtes Festbett aus feinteiligem Polypropylen.

In den Polymerisationsreaktor wurde bei einem Druck von 28 bar und einer Temperatur von 70°C gasförmiges Propylen eingeleitet und dieses kontinuierlich mit Hilfe eines Ziegler-Natta-Katalysators polymerisiert. Dabei wurden pro Stunde 1 g einer titanhaltigen Feststoffkomponente, 60 mmol Triethylaluminium und 12 mmol Dimethoxyisobutylisopropylsilan als Katalysatorbestandteile verwendet. Die mittlere Verweilzeit des Reaktionsgemisches betrug 3 Stunden. Bei diesem Verfahren wurden pro mmol der Aluminiumverbindung 0,4 kg Polypropylen erzeugt. Die titanhaltige Feststoffkomponente wurde nach folgendem Verfahren hergestellt.

Dazu versetzte man in einer ersten Stufe SiO₂, welches einen Teilchendurchmesser von 20 bis 45 µm, ein Porenvolumen von 1,75 cm³/g und eine Oberfläche von 320 m²/g aufwies, mit in n-Heptan gelöstem Butyl-octyl-magnesium, wobei pro Mol SiO₂ 0,2 mol der Magnesiumverbindung eingesetzt wurden. Die Lösung wurde 1,5 Stunden lang bei 90°C gerührt, danach auf 20°C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurden unter ständigem Rühren 3 mol Ethanol, bezogen auf 1 mol Magnesium hinzugefügt. Dieses Gemisch wurde 1,5 Stunden bei 80°C gerührt und danach mit 6 mol Titantetrachlorid und 0,5 mol Phthalsäure-di-n-butylester, jeweils bezogen auf 1 mol Magnesium, versetzt. Das Reaktionsgemisch wurde weitere 2 Stunden gerührt, wonach der Feststoff vom Lösungsmittel durch Filtration abgetrennt wurde.

Das so erhaltene Produkt extrahierte man 2 Stunden lang bei 125°C mit einer 15 gew.-%igen Lösung von Titantetrachlorid in Ethylbenzol.

Danach wurde das Festprodukt durch Filtration vom Extraktionsmittel getrennt und solange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

Auf diese Weise erhielt man ein Propylenhomopolymerisat a), das nachfolgend in einem Zweischneckenextruder "ZSK 53" der Firma Werner & Pfleiderer bei einer Temperatur von etwa 230°C mit 0,4 Gew.-Teilen, bezogen auf 100 Gew.-Teilen des Propylenhomopolymerisats a), eines feinteiligen Talkums vermischt wurde. Das feinteilige Talkum wies eine mittlere Teilchengröße von 1,5 µm auf.

Die Eigenschaften des eingesetzten Propylenhomopolymerisats a) sowie des erhaltenen Propylenpolymerisats sind in der nachfolgenden Tabelle aufgeführt.

### Vergleichsbeispiel A

Es wurde analog dem Beispiel 1 ein mit Talkum nukleiertes Propylenpolymerisat hergestellt, im Unterschied zum Beispiel 1 aber dabei ein solches Propylenhomopolymerisat a) verwendet, dessen Isotaktizitätsindex unterhalb von 98 % lag.

Die entsprechenden Eigenschaften des erhaltenen Propylenpolymerisats können der nachstehenden Tabelle entnommen werden.

### Vergleichsbeispiel B

Es wurde analog dem Beispiel 1 ein mit Talkum nukleiertes Propylenpolymerisat hergestellt, im Unterschied zum Beispiel 1 wurden aber bezogen auf 100 Gew.-Teile des Propylenhomopolymerisats a) 2,0 Gew.-Teile des feinteiligen Talkums eingesetzt.

Die entsprechenden Eigenschaften des erhaltenen Propylenpolymerisats können der nachstehenden Tabelle entnommen werden.

### Vergleichsbeispiel C

Es wurde analog dem Beispiel 1 ein mit Talkum nukleiertes Propylenpolymerisat hergestellt, im Unterschied zum Beispiel 1 aber dabei ein solches Propylenhomopolymerisat a) verwendet, dessen Schmelzflußindex nach ISO-Norm 1133 einen Wert von 45 g/10 min, bei 230°C und 2,16 kg aufwies.

Die entsprechenden Eigenschaften des erhaltenen Propylenpolymerisats können der nachstehenden Tabelle entnommen werden.

### Beispiel 2

Es wurde analog dem Beispiel 1 ein mit Talkum nukleiertes Propylenpolymerisat hergestellt, im Unterschied zum Beispiel 1 wurde aber ein solches Propylenhomopolymerisat a) verwendet, dessen Schmelzflußindex nach ISO-Norm 1133 einen Wert von 19 g/10 min, bei 230°C und 2,16 kg aufwies. Darüber hinaus wurden pro 100 Gew.-Teile des Propylenhomopolymerisats a) 0,6 Gew.-Teile feinteiliges Talkum eingearbeitet.

Die entsprechenden Eigenschaften des erhaltenen Propylenpolymerisats können der nachstehenden Tabelle entnommen werden.

**Tabelle**

| | Beispiele | | Vergleichsbeispiele | | |
|---|---|---|---|---|---|
| | 1 | 2 | A | B | C |
| Propylenhomopolymerisat a) | | | | | |
| Schmelzflußindex ^{a}) [g/10 min] | 11,0 | 19,0 | 11,0 | 11,0 | 45,0 |
| Isotaktizität ^{b}) [%] | 98,6 | 98,4 | 96,7 | 98,3 | 98,2 |

| Propylenpolymerisat | | | | | |
|---|---|---|---|---|---|
| Talkumgehalt ^{c}) [Gew.-Teile] | 0,4 | 0,6 | 0,4 | 2,0 | 0,4 |
| Steifigkeit ^{d}) [MPa] | 2040,0 | 2060,0 | 1780,0 | 2250,0 | 2080,0 |
| Izod-Schlagzähigkeit ^{e}) [kJ/m³] | 52,0 | 50,0 | 54,0 | 31,0 | 27,0 |

| | | | | | |
|---|---|---|---|---|---|
| ^{a}) nach ISO-Norm 1133, bei 230°C und 2,16 kg | | | | | |
| ^{b}) nach ISO-Norm 6427 b) in siedendem Xylol | | | | | |
| ^{c}) bezogen auf 100 Gew.-Teile Propylenhomopolymerisat | | | | | |
| ^{d}) nach ISO-Norm 527, bei 23°C | | | | | |
| ^{e}) nach ISO-Norm 180/1C, bei 23°C | | | | | |

Aus der Tabelle wird ersichtlich, daß erst die erfindungsgemäßen Propylenpolymerisate ein sehr günstiges Eigenschaftsprofil in bezug auf Steifigkeit und Schlagzähigkeit aufweisen. Weiterhin zeichnen sich die erfindungsgemäßen Propylenpolymerisate durch eine sehr gute Fließfähigkeit und eine geringe Eigenfarbe aus.

## Patentansprüche

1. Propylenpolymerisate, enthaltend
a) ein Propylenhomopolymerisat mit einem Schmelzflußindex von 5 bis 25 g/10 min, bei einer Temperatur von 230°C und unter einem Gewicht von 2,16 kg, nach ISO-Norm 1133 und einem Isotaktizitätsindex von wenigstens 98 % und
b) ein Nukleierungsmittel,
wobei pro 100 Gew.-Teile des Propylenhomopolymerisats a) 0,01 bis 1,5 Gew.-Teile des Nukleierungsmittels b) eingesetzt werden.

2. Propylenpolymerisate nach Anspruch 1, wobei ein solches Propylenhomopolymerisat a) eingesetzt wird, welches einen Schmelzflußindex von 8 bis 22 g/10 min, bei einer Temperatur von 230°C und unter einem Gewicht von 2,16 kg, nach ISO-Norm 1133, aufweist.

3. Propylenpolymerisate nach den Ansprüchen 1 oder 2, wobei das Propylenhomopolymerisat a) einen Isotaktizitätsindex von 98,0 bis 99,0 % aufweist.

4. Propylenpolymerisate nach den Ansprüchen 1 bis 3, wobei als Nukleierungsmittel b) feinteiliges Talkum verwendet wird.

5. Propylenpolymerisate nach Anspruch 4, wobei das feinteilige Talkum eine mittlere Teilchengröße von weniger als 5 µm aufweist.

6. Propylenpolymerisate nach den Ansprüchen 1 bis 5, wobei pro 100 Gew.-Teile des Propylenhomopolymerisats a) 0,1 bis 1,0 Gew.-Teile des Nukleierungsmittels b) eingesetzt werden.

7. Verfahren zur Herstellung von Propylenpolymerisaten gemäß den Ansprüchen 1 bis 6, dadurch gekennzeichnet, daß das Propylenhomopolymerisat a) und das Nukleierungsmittel b) in einer Mischapparatur bei einer Temperatur von 200 bis 250°C miteinander vereinigt werden.

8. Verfahren nach Anspruch 7, dadurch gekennzeichnet, daß als Mischapparatur ein Extruder verwendet wird.

9. Verwendung der Propylenpolymerisate gemäß den Ansprüchen 1 bis 6 als Folien, Fasern oder Formkörper.

## Claims

1. A propylene polymer containing
a) a propylene homopolymer having a melt flow index of from 5 to 25 g/10 min at 230°C and under a weight of 2.16 kg, according to ISO standard 1133, and an isotacticity index of at least 98% and
b) a nucleating agent,
from 0.01 to 1.5 parts by weight of the nucleating agent b) being used per 100 parts by weight of the propylene homopolymer a).

2. A propylene polymer as claimed in claim 1, wherein the propylene homopolymer a) used is one which has a melt flow index of from 8 to 22 g/10 min at 230°C and under a weight of 2.16 kg according to ISO standard 1133.

3. A propylene polymer as claimed in claim 1 or 2, wherein the propylene homopolymer a) has an isotacticity index of 98.0 to 99.0%.

4. A propylene polymer as claimed in any of claims 1 to 3, wherein the nucleating agent b) used is finely divided talc.

5. A propylene polymer as claimed in claim 4, wherein the finely divided talc has a mean particle size of less than 5 µm.

6. A propylene polymer as claimed in any of claims 1 to 5, wherein from 0.1 to 1.0 part by weight of the nucleating agent b) is used per 100 parts by weight of the propylene homopolymer a).

7. A process for the preparation of a propylene polymer as claimed in any of claims 1 to 6, wherein the propylene homopolymer a) and the nucleating agent b) are combined with one another in a mixing apparatus at from 200 to 250°C.

8. A process as claimed in claim 7, wherein the mixing apparatus used is an extruder.

9. Use of a propylene polymer as claimed in any of Claims 1 to 6 as a film, fiber or molding.

## Revendications

1. Polymères de propylène, contenant
a) un homopolymère de propylène avec un indice de fusion de 5 à 25 g/10 min à une température de 230 °C et sous un poids de 2,16 kg, suivant la norme ISO 1133 et avec un indice d'isotacticité d'au moins 98 % et
b) un agent de nucléation,
en utilisant par 100 parts en poids de l'homopolymère de propylène a) 0,01 à 1,5 parts en poids de l'agent de nucléation b).

2. Polymères de propylène selon la revendication 1, pour lesquels on utilise un homopolymère de propylène a) qui présente un indice de fusion de 8 à 22 g/10 min à une température de 230 °C et sous un poids de 2,16 kg, suivant la norme ISO 1133.

3. Polymères de propylène selon les revendications 1 ou 2, pour lesquels l'homopolymère de propylène a) présente un indice d'isotacticité de 98,0 à 99,0 %.

4. Polymères de propylène selon les revendications 1 à 3, pour lesquels on utilise, à titre d'agent de nucléation b), un talc finement divisé.

5. Polymères de propylène selon la revendication 4, pour lesquels le talc finement divisé présente une granulométrie moyenne inférieure à 5 µm.

6. Polymères de propylène selon les revendications 1 à 5, pour lesquels on utilise, par 100 parts en poids de l'homopolymère de propylène a), 0,1 à 1,0 part en poids de l'agent de nucléation b).

7. Procédé de préparation de polymères de propylène selon les revendications 1 à 6, caractérisé en ce que l'homopolymère de propylène a) et l'agent de nucléation b) sont combinés dans un dispositif de mélange à une température de 200 à 250 °C.

8. Procédé selon la revendication 7, caractérisé en ce qu'on utilise, à titre de dispositif de mélange, une extrudeuse.

9. Utilisation des polymères de propylène selon les revendications 1 à 6, comme films, comme fibres ou comme objets moulés.
